# EUROPÄISCHE PATENTSCHRIFT

(11) **EP 2 608 647 B1**
(45) Veröffentlichungstag und Bekanntmachung des Hinweises auf die Patenterteilung: **11.12.2013**
(21) Anmeldenummer: 12198861.2
(22) Anmeldetag: 21.12.2012
(51) Int. Cl.: H05K 7/14, B60K 35/00, B60K 37/06, B60R 11/02, B60K 37/04, B60R 11/00

(54) **Frontbaugruppe für ein Gerät oder Aggregat in einem Fahrzeug**
Front assembly for a device or unit in a vehicle
Composant frontal pour un appareil ou un agrégat dans un véhicule

(30) Priorität: 23.12.2011 DE 102011089901
(43) Veröffentlichungstag der Anmeldung: 26.06.2013
(73) Patentinhaber: TechniSat Digital GmbH, 54550 Daun (DE)
(72) Erfinder: Porth, Dipl.-Ing. Christian, 01157 Dresden (DE); Jentsch, Dipl.-Ing. Rochus Werner, 01307 Dresden (DE)

(56) Entgegenhaltungen:
- US-A- 4 068 175
- US-A1- 2003 141 738
- US-A1- 2003 146 350

## Beschreibung

Die Erfindung betrifft eine Frontbaugruppe für ein Gerät oder Aggregat in einem Fahrzeug, ein Verfahren zum Montieren der Frontbaugruppe und ein Verfahren zum Demontieren der Frontbaugruppe.

Herkömmliche in Fahrzeugen eingebaute Geräte und Aggregate, beispielsweise Rundfunkempfangseinrichtungen, Navigationsgeräte, Radio-Navigationsgeräte, Klimaanlagen und Bordcomputer, verfügen jeweils über eine Frontblende, die vom Fahrzeuginnenraum zugänglich ist. Die Frontblende weist in der Regel eine Anzeigeeinheit, beispielsweise einen Bildschirm, und mehrere Bedienelemente, beispielsweise Druckschalter, Tasten, Drehschalter, Stufenschalter, Schiebeschalter oder Drehregler, auf. Während die Anzeigeeinheit zum Ausgeben von Informationen an einen Fahrzeugführer dient, ermöglichen die Bedienelemente eine manuelle Bedienung des jeweiligen Geräts oder Aggregats.

Die US-A-4 068 175 zeigt eine Frontbaugruppe für ein Gerät oder Aggregat in einem Fahrzeug, wobei die Frontbaugruppe aufweist: Einen Trägerrahmen mit einem ersten Rastelement, eine in dem Trägerrahmen angeordnete Leiterplatte mit einem Bedienelement oder einer Anzeigeeinheit und eine an der Vorderseite des Trägerrahmens angeordnete Frontblende mit einem zweiten Rastelement, wobei das erste Rastelement mit dem zweiten Rastelement verrastet ist, sodass die Frontblende an dem Trägerrahmen befestigt ist.

In letzter Zeit wurden viele in Fahrzeugen eingebaute Geräte und Aggregate mit Frontblenden ausgestattet, die aus Designgründen über Hochglanzoberflächen oder andere empfindliche Oberflächen verfügen. Solche Frontblenden sind besonders anfällig gegen mechanische Beschädigungen, beispielsweise in Form von Kratzern oder Dellen. Die Beschädigungen können insbesondere beim Montieren eines Geräts oder Aggregats oder bei seinem Einbau in ein Fahrzeug auftreten und einen Austausch der Frontblende erforderlich machen.

Der Austausch der Frontblende ist jedoch aufwendig, da zu diesem Zweck das Gehäuse des Geräts oder Aggregats geöffnet werden muss, damit die Befestigungselemente gelöst werden können, mit denen die Frontblende an dem Gerät oder Aggregat befestigt ist. Erst dann kann die Frontblende abgenommen werden. Das hat den Nachteil zusätzlichen Aufwands. Daneben kann das Öffnen des Gehäuses zum Eindringen von Fremdkörpern, beispielsweise Schmutz, in das Gehäuseinnere führen, wodurch die ordnungsgemäße Funktion des Geräts oder Aggregats beeinträchtigt werden kann.

Manche Geräte und Aggregate in einem Fahrzeug sind mit einer separaten Frontbaugruppe versehen. Eine derartige Frontbaugruppe ist durch eine lösbare Verbindung, beispielsweise eine Schraubverbindung, mit dem Gehäuse des Geräts oder Aggregats verbunden. Der Vorteil einer solchen Lösung besteht darin, dass zum Austauschen der Frontblende der Frontbaugruppe kein Öffnen des Gehäuses erforderlich ist. Dadurch wird ein Eindringen von Fremdkörpern in das Gehäuse beim Austauschen der Frontblende vermieden.

Der Nachteil einer solchen Lösung besteht jedoch darin, dass das Austauschen der Frontblende ein Abnehmen der Frontbaugruppe von dem Gehäuse und ein Öffnen der Frontbaugruppe erfordert, sodass der Innenraum der Frontbaugruppe zugänglich wird. Das ist notwendig, damit die Befestigungselemente gelöst werden können, mit denen die Frontblende an der Frontbaugruppe befestigt ist. Dadurch entsteht zusätzlicher Aufwand. Daneben kann das Öffnen der Frontbaugruppe zum Eindringen von Fremdkörpern, beispielsweise Schmutz, in die Frontbaugruppe führen, wodurch die ordnungsgemäße Funktion der Frontbaugruppe beeinträchtigt werden kann.

Ein weiterer Nachteil einer separat vom Gehäuse eines Geräts oder Aggregats angeordneten Frontbaugruppe besteht darin, dass beim Montieren der Frontbaugruppe die Frontblende angebracht werden muss, solange der Innenraum der Frontbaugruppe noch von außen zugänglich ist. Das ist notwendig, damit die Frontblende im Innenraum der Frontbaugruppe befestigt werden kann. Deshalb muss die Frontblende in einem vergleichsweise frühen Stadium des Montageprozesses angebracht werden, insbesondere bevor die Frontbaugruppe verschlossen wird. Das führt dazu, dass die Frontblende bei einer großen Anzahl nachfolgender Montagesschritte mitgeführt werden muss, sodass ein hohes Risiko besteht, die Oberfläche der Frontblende während des Montageprozesses zu beschädigen.

Daher stellt sich die Aufgabe, eine Frontbaugruppe für ein Gerät oder Aggregat in einem Fahrzeug bereitzustellen, welche derart ausgebildet ist, dass das Risiko eines Beschädigens der Frontblende der Frontbaugruppe beim Montieren der Frontbaugruppe vermindert wird. Ferner soll die Frontbaugruppe derart ausgebildet sein, dass die Frontblende mit geringem Aufwand austauschbar ist. Dabei soll das Risiko des Eindringens von Fremdkörpern in das Innere der Frontbaugruppe beim Austauschen der Frontblende niedrig sein.

Die Aufgabe wird mit der Frontbaugruppe für ein Gerät oder Aggregat in einem Fahrzeug gemäß der Erfindung gelöst. Die Frontbaugruppe weist folgende Bestandteile auf:
(a) einen Trägerrahmen mit einem ersten Rastelement und einem ersten Loch,
(b) eine in dem Trägerrahmen angeordnete Leiterplatte mit einem Bedienelement oder einer Anzeigeeinheit und einem zweiten Loch,
(c) ein an der Rückseite des Trägerrahmens befestigtes Abschlussblech mit einem dritten Loch und
(d) eine an der Vorderseite des Trägerrahmens angeordnete Frontblende mit einem zweiten Rastelement und einem Befestigungsstift, welcher durch das erste Loch, das zweite Loch und das dritte Loch geführt ist.
Das erste Rastelement ist mit dem zweiten Rastelement verrastet, sodass die Frontblende an dem Trägerrahmen befestigt ist. Ferner weist der Befestigungsstift der Frontblende eine an der Rückseite des Abschlussblechs angeordnete Verdickung auf, sodass eine zusätzliche Befestigung der Frontblende an dem Trägerrahmen ausgebildet ist.

Folglich verläuft der Befestigungsstift ausgehend von der Frontblende durch den Trägerrahmen, die Leiterplatte und das Abschlussblech. Dadurch ist das Ende des Befestigungsstifts an der Rückseite des Abschlussblechs, also von außen, zugänglich. Deshalb kann die Frontbaugruppe beim Montieren der Frontblende bereits durch das Abschlussblech geschlossen sein. Das hat den Vorteil, dass die Frontblende am Ende des Montageprozesses an der Frontbaugruppe angebracht werden kann. Somit ist das Risiko einer Beschädigung der Frontblende während des Montageprozesses im Vergleich zu einer herkömmlichen Frontbaugruppe vermindert.

Des Weiteren ermöglicht die Erfindung ein einfaches Austauschen der Frontblende der fertig montierten Frontbaugruppe. Dazu wird die Frontbaugruppe gegebenenfalls vom Gehäuse des Geräts oder Aggregats abgenommen, um die Verdickung des Befestigungsstifts auf der Rückseite des Abschlussblechs zugänglich zu machen. Dann wird die Verdickung entfernt, beispielsweise aufgebohrt, sodass eine der beiden Befestigungen der Frontblende an dem Trägerrahmen gelöst wird. Danach wird das zweite Rastelement von dem ersten Rastelement entrastet, sodass die andere Befestigung der Frontblende an dem Trägerrahmen gelöst wird. Anschließend lässt sich die Frontblende von der Frontbaugruppe abnehmen.

Zum Montieren der neuen Frontblende wird diese auf die Vorderseite des Trägerrahmens aufgesetzt, wobei das zweite Rastelement mit dem ersten Rastelement verrastet wird und der Befestigungsstift durch das erste Loch, das zweite Loch und das dritte Loch geführt wird. Anschließend wird an dem Ende des Befestigungsstifts der neuen Frontblende, das aus der Rückseite des Abschlussblechs herausragt, eine neue Verdickung ausgebildet, sodass eine zusätzliche Befestigung der Frontblende an dem Trägerrahmen hergestellt wird.

Mit der beschriebenen Verfahrensweise kann die Frontblende mit besonders geringem Aufwand ausgetauscht werden, wobei kein Öffnen der Frontbaugruppe erforderlich ist, sodass keine Fremdkörper in die Frontbaugruppe eindringen können.

Neben der erfindungsgemäßen Frontbaugruppe wird auch ein Verfahren zum Montieren der Frontbaugruppe bereitgestellt, welches folgende Schritte aufweist:
(1) Bereitstellen eines Trägerrahmens mit einem ersten Rastelement und einem ersten Loch, einer Leiterplatte mit einem Bedienelement oder einer Anzeigeeinheit und einem zweiten Loch, eines Abschlussblechs mit einem dritten Loch und einer Frontblende mit einem zweiten Rastelement und einem Befestigungsstift,
(2) Einsetzen der Leiterplatte in den Trägerrahmen, sodass das zweite Loch mit dem ersten Loch fluchtet,
(3) Befestigen des Abschlussblechs an der Rückseite des Trägerrahmens, sodass das dritte Loch mit dem ersten Loch fluchtet,
(4) Befestigen der Frontblende an der Vorderseite des Trägerrahmens, indem der Befestigungsstift durch das erste Loch, das zweite Loch und das dritte Loch geführt wird und das erste Rastelement mit dem zweiten Rastelement verrastet wird,
(5) Ausbilden einer an der Rückseite des Abschlussblechs angeordneten Verdickung des Befestigungsstifts, sodass eine zusätzliche Befestigung der Frontblende an dem Trägerrahmen hergestellt wird.

Des Weiteren wird ein Verfahren zum Demontieren der obigen Frontbaugruppe bereitgestellt, welches die folgenden Schritte aufweist:
(1) Entfernen der Verdickung, sodass eine Befestigung der Frontblende an dem Trägerrahmen gelöst wird,
(2) Entrasten des zweiten Rastelements von dem ersten Rastelement, sodass eine weitere Befestigung der Frontblende an dem Trägerrahmen gelöst wird, und
(3) Abnehmen der Frontblende von dem Trägerrahmen, sodass der Befestigungsstift aus dem ersten Loch herausgezogen wird.

Weitere Ausführungsformen der Erfindung sind in den abhängigen Patentansprüchen beschrieben.

Im Folgenden wird die Erfindung anhand von Figuren weiter erläutert, welche Folgendes darstellen:
Figur 1 zeigt die Frontblende einer Frontbaugruppe gemäß einer Ausführungsform der Erfindung in einer Ansicht von vorn.
Figur 2 zeigt die Frontblende aus Figur 1 in einer Ansicht von hinten und in einer Seitenansicht.
Figur 3 zeigt den Trägerrahmen der Frontbaugruppe in einer Ansicht von hinten und in einer Seitenansicht.
Figur 4 zeigt die Leiterplatte der Frontbaugruppe in einer Ansicht von hinten und in einer Seitenansicht.
Figur 5 zeigt das Abschlussblech der Frontbaugruppe in einer Ansicht von hinten und in einer Seitenansicht.
Figur 6 zeigt die Frontblende, den Trägerrahmen, die Leiterplatte und das Abschlussblech jeweils in einer Seitenansicht, zur Verdeutlichung einer Ausführungsform des erfindungsgemäßen Verfahrens zum Montieren der Frontbaugruppe.

Die Figuren 7 und 8 zeigen jeweils die Frontbaugruppe in einer Seitenansicht.

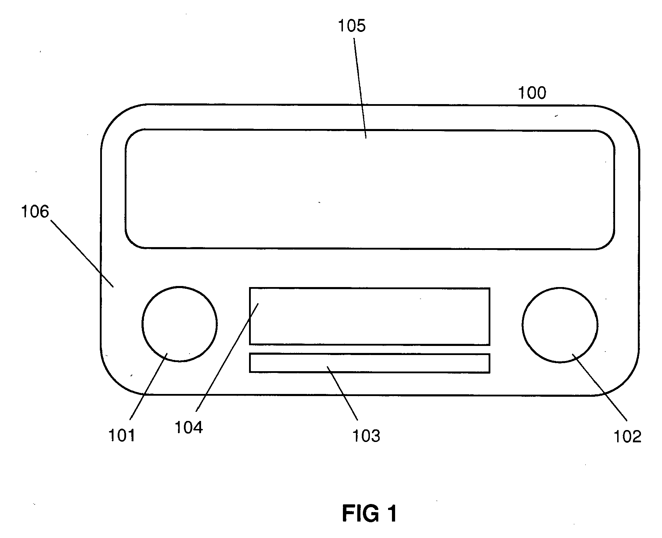

Im Folgenden wird zunächst auf die Figuren 1 bis 5 Bezug genommen, welche Bestandteile einer Frontbaugruppe gemäß einer Ausführungsform der Erfindung zeigen. Die Frontbaugruppe gehört zu einer in einem Fahrzeug eingebauten Rundfunkempfangseinrichtung, welche neben der Frontbaugruppe auch eine hinter der Frontbaugruppe angeordnete Hauptbaugruppe aufweist, die von einem Gehäuse umgeben ist.

**Figur 1** zeigt die Frontblende 100 der Frontbaugruppe in einer Ansicht von vorn.

Die Frontblende 100 hat die Form eines Rechtecks, dessen Ecken abgerundet sind. Alternativ dazu kann die Frontblende auch eine andere Form aufweisen, beispielsweise ein Trapezform. Die in Figur 1 sichtbare Vorderseite 106 der Frontblende 100 verfügt über eine Hochglanzoberfläche. Die Vorderseite 106 ist im vorliegenden Fall eben, kann aber alternativ dazu auch gewölbt sein. Optional kann die Vorderseite 106 ein Dekorelement (nicht gezeigt) aufweisen, beispielsweise eine erhabene Umrandung, welche sich farblich vom Rest der Vorderseite 106 abhebt.

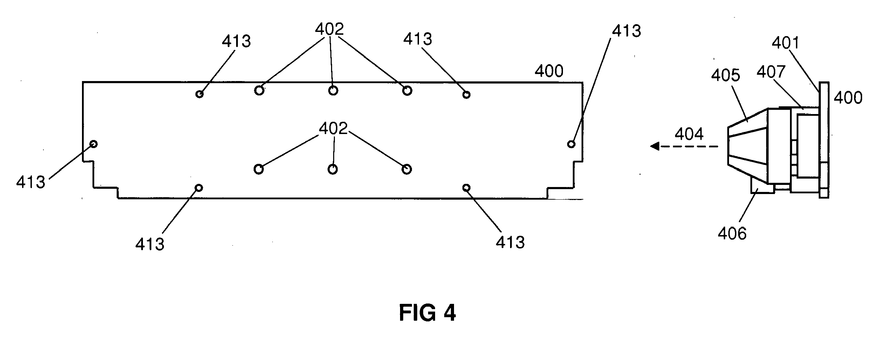

Ferner ist die Frontblende 100 mit fünf Aussparungen 101 bis 105 versehen. Die kreisrunden Aussparungen 101 und 102 sollen jeweils ein Bedienelement in Form eines Drehknopfs 405 (siehe Figur 4) aufnehmen. Die rechteckförmige Aussparung 103 soll mehrere Bedienelemente in Form von Drucktasten 406 (siehe Figur 4) aufnehmen. Die rechteckförmige Aussparung 104 soll eine Anzeigeeinheit 407 (siehe Figur 4) der Rundfunkempfangseinrichtung aufnehmen. Die rechteckförmige Aussparung 105 soll die Bedieneinheit der Klimaanlage des Fahrzeugs aufnehmen, sodass die Bedieneinheit von der Frontblende 100 umrahmt wird. Die genannten Drehknöpfe 405, die genannten Drucktasten 406 und die genannte Anzeigeeinheit 407 sind auf einer Leiterplatte 400 (siehe Figur 4) befestigt.
Zusätzlich zu den Aussparungen 101 bis 105 kann die Frontblende 100 weitere Aussparungen aufweisen, beispielsweise eine Aussparung für ein weiteres Bedienelement, zum Einschieben eines Speichermediums oder zum Anschließen eines externen Geräts.

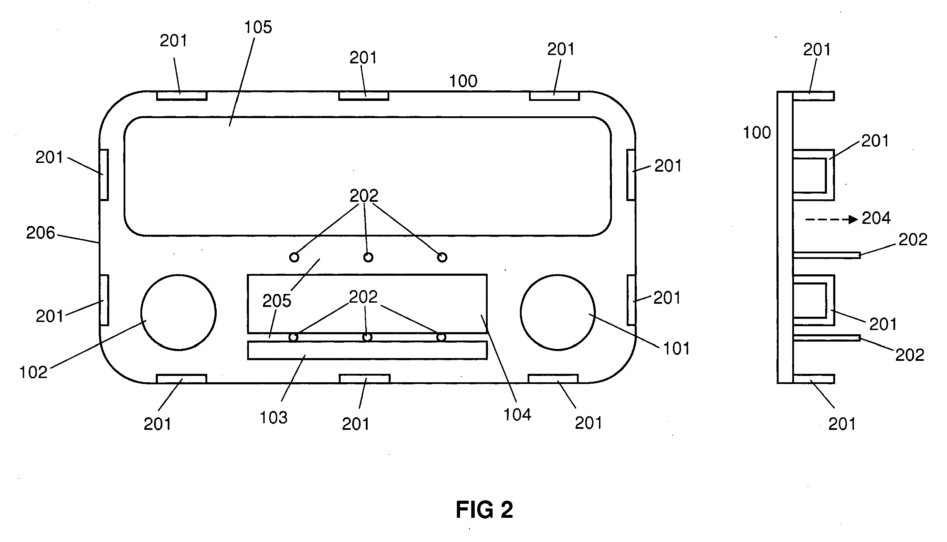

**Figur 2** zeigt die Frontblende 100 aus Figur 1 in einer Ansicht von hinten und in einer Seitenansicht.

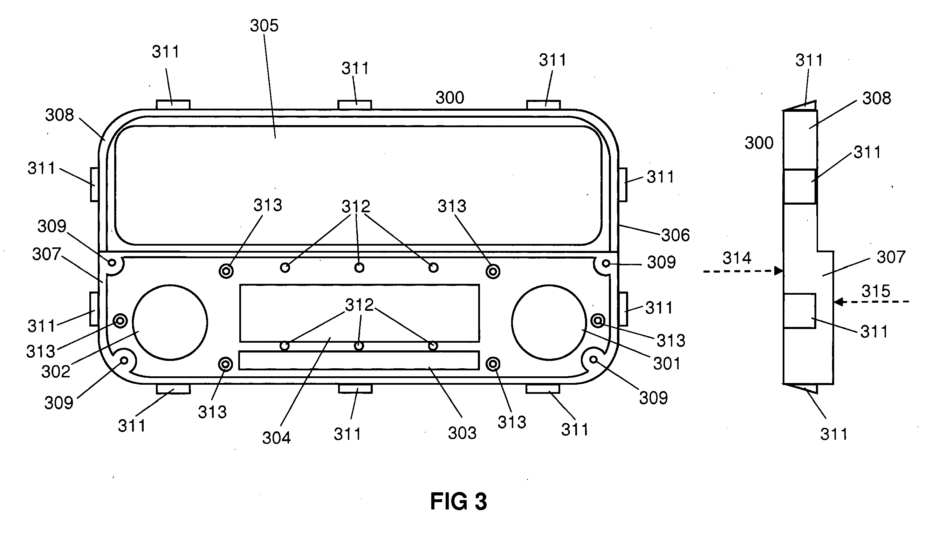

Die Frontblende 100 weist mehrere U-förmige Rastelemente 201 auf, die an dem umlaufenden Außenrand 206 der Frontblende 100 angeordnet sind. Jedes der Rastelemente 201 kann mit einem Rastelement 311 des Trägerrahmens 300 (siehe Figur 3) verrastet werden, sodass die Frontblende 100 an dem Trägerrahmen 300 befestigt wird. Aufgrund ihrer Anordnung am Außenrand 206 der Frontblende 100 sind die verrasteten Rastelemente 201 von außerhalb der fertig montierten Frontbaugruppe zugänglich, sodass sich die Rastelemente 201 von den Rastelementen 311 lösen lassen, ohne die Frontbaugruppe zu öffnen.

Außerdem weist die Frontblende 100 mehrere zylinderstabförmige Befestigungsstifte 202 auf, welche im unteren Bereich der Frontblende 100 angeordnet sind, wobei die Befestigungsstifte 202 nahezu senkrecht aus der Rückseite der Frontblende 100 ragen. Die Befestigungsstifte 202 dienen zum Befestigen von Bereichen der Frontblende 100, die vom Außenrand 206 beabstandet sind, an dem Trägerrahmen 300. Die Befestigungsstifte 202 verhindern, dass die genannten Bereiche in unerwünschter Weise von dem Trägerrahmen abstehen oder bei Vibrationen des Fahrzeugs schwingen.

Im vorliegenden Fall handelt es sich bei den genannten Bereichen um die Stege 205, welche zwischen den Aussparungen 103 und 104 beziehungsweise 104 und 105 angeordnet sind. Die Stege 205 sind mit jeweils drei Befestigungsstiften 202 versehen.

Demzufolge werden anstelle von Rastelementen die Befestigungsstifte 202 eingesetzt, um die Stege 205 an dem Trägerrahmen 300 zu befestigen. Das ist darin begründet, dass sich die Befestigungsstifte 202 im Gegensatz zu Rastelementen auch dann lösen lassen, ohne die fertig montierte Frontbaugruppe zu öffnen, wenn sie vom Außenrand 206 beabstandet sind.

Zusammenfassend werden zum Befestigen der Frontblende 100 an dem Trägerrahmen 300 Rastelemente 201, die am Außenrand 206 der Frontblende 100 angeordnet sind, mit Befestigungsstiften 202 kombiniert, die vom Außenrand 206 der Frontblende 100 beabstandet sind, sodass sich die Befestigung der Frontblende 100 an dem Trägerrahmen 300 lösen lässt, ohne die fertig montierte Frontbaugruppe zu öffnen.

Gemäß einer anderen Ausführungsform der Erfindung sind weitere Bereiche der Frontblende, die vom Außenrand beabstandet sind, mit Befestigungsstiften versehen, beispielsweise die Umgebungsbereiche von Aussparungen.

Die Frontblende 100 ist mit den Rastelementen 201 und den Befestigungsstiften 202 einstückig ausgebildet, sodass die Rastelemente 201 und die Befestigungsstifte 202 das gleiche Material aufweisen, wie der Rest der Frontblende 100. Das bewirkt, dass die Frontblende 100 kostengünstig hergestellt werden kann, wobei die Rastelemente 201 und die Befestigungsstifte 202 fest mit der Frontblende 100 verbunden sind. Das Material der Frontblende 100 beziehungsweise der Befestigungsstifte 202 ist thermoplastisch verformbar.

Des Weiteren ist die Richtung 204 gezeigt, in welcher die Frontblende 100 bei dem Montieren der Frontbaugruppe auf den Trägerrahmen 300 aufgesetzt wird.

**Figur 3** zeigt den Trägerrahmen 300 der Frontbaugruppe in einer Ansicht von hinten und in einer Seitenansicht.

Der Trägerrahmen 300 hat die Form eines Rechtecks, dessen Ecken abgerundet sind. Alternativ dazu kann der Trägerrahmen aber auch eine andere Form aufweisen, beispielsweise eine Trapezform. Der Trägerrahmen 300 ist mit fünf Aussparungen 301 bis 305 versehen, welche mit den Aussparungen 101 bis 105 der Frontblende 100 (siehe Figur 1) korrespondieren.

Außerdem verfügt der Trägerrahmen 300 über eine erste Seitenwand 307, welche den unteren Bereich des Trägerrahmens 300 umgibt. Dazu verläuft die erste Seitenwand 307 entlang des unteren Abschnitts des umlaufenden Außenrands 306 des Trägerrahmens 300 und unter der Aussparung 305 entlang. Die erste Seitenwand 307 weist vier Verstärkungen auf, die jeweils mit einem Schraubloch 309 versehen sind. Zusätzlich verfügt der Trägerrahmen 300 über eine zweite Seitenwand 308, welche entlang des oberen Abschnitts des Außenrands 306 verläuft. Beide Seitenwände, 307 und 308, ragen nahezu senkrecht aus der Rückseite des Trägerrahmens 300.

Ferner weist der Trägerrahmen 300 mehrere Rastelemente 311 auf, welche auf den Seitenwänden 307 und 308 angeordnet sind und mit den Rastelementen 201 der Frontblende 100 (siehe Figur 2) korrespondieren, sodass die Rastelemente 201 der Frontblende 100 mit den Rastelementen 311 des Trägerrahmens 300 verrastet werden können. Die Rastelemente 311 sind jeweils rechteckförmig ausgebildet und gegenüber der jeweiligen Seitenwand 307 beziehungsweise 308 abgeschrägt.

Weiterhin verfügt der Trägerrahmen 300 über mehrere kreisrunde Löcher 312, welche mit den Befestigungsstiften 202 der Frontblende 100 (siehe Figur 2) korrespondieren, sodass die Befestigungsstifte 202 durch die Löcher 312 geführt werden können. Außerdem ist der . Trägerrahmen 300 mit mehreren zylinderstabförmigen Abstandshaltern 313 versehen, welche nahezu senkrecht aus der Rückseite des Trägerrahmens 300 ragen. Die Abstandshalter 313 dienen zum Befestigen der Leiterplatte 400 (siehe Figur 4) in dem Trägerrahmen 300 in einer vorgegebenen Lage. Dazu verfügt jeder der Abstandshalter 313 über eine geeignete Höhe. Außerdem ist jeder der Abstandshalter 313 mit einem auf seiner sichtbaren Stirnfläche angeordneten Schraubloch versehen, in welches eine Befestigungsschraube (nicht gezeigt) eingedreht werden kann.

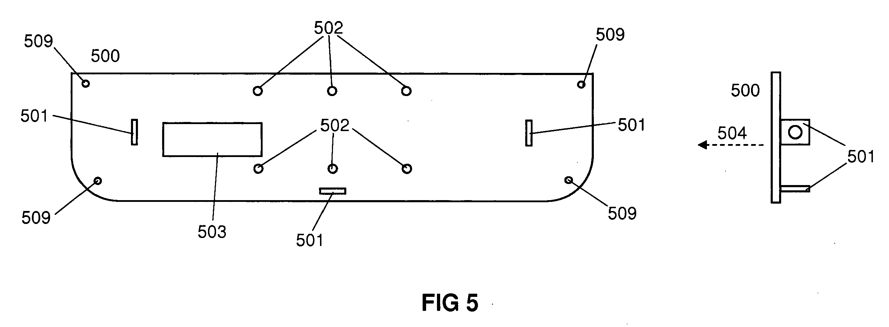

Des Weiteren ist die Richtung 314 dargestellt, aus welcher die Frontblende 100 beim Montieren der Frontbaugruppe auf den Trägerrahmen 300 aufgesetzt wird. Ferner ist die Richtung 315 gezeigt, aus welcher das Abschlussblech 500 (siehe Figur 5) beim Montieren der Frontbaugruppe auf den Trägerrahmen 300 aufgesetzt wird.

**Figur 4** zeigt die Leiterplatte 400 der Frontbaugruppe in einer Ansicht von hinten und in einer Seitenansicht.

Die Leiterplatte 400 hat eine rechteckförmige Grundform und ist derart ausgebildet, dass sie in dem Trägerrahmen 300 platziert werden kann, sodass die Leiterplatte 400 an den Abstandshaltern 313 anliegt und von der Seitenwand 307 (siehe Figur 3) umschlossen wird. Die Leiterplatte 400 verfügt über eine Mehrzahl kreisrunder Löcher 402, welche mit den Befestigungsstiften 202 der Frontblende 100 (siehe Figur 2) und den Löchern 312 des Trägerrahmens 300 (siehe Figur 3) korrespondieren, sodass die Befestigungsstifte 202 durch die Löcher 312 und 402 geführt werden können. Auf der Vorderseite 401 der Leiterplatte 400 sind die oben genannten Drehknöpfe 405, Drucktasten 406 und die Anzeigeeinheit 407 befestigt, beispielsweise aufgeklebt oder aufgelötet. Ferner können weitere elektrische Elemente, beispielsweise elektronische Bauelemente oder Leiterbahnen, auf der Leiterplatte 400 angeordnet sein.
**Figur 5** zeigt das Abschlussblech 500 der Frontbaugruppe in einer Ansicht von hinten und in einer Seitenansicht.

Das Abschlussblech 500 hat die Form eines Rechtecks, dessen untere Ecken abgerundet sind und dessen obere Ecken rechtwinklig zulaufen. Das Abschlussblech 500 ist ferner derart ausgebildet, dass sich damit die Seitenwand 307 inklusive des von der Seitenwand 307 umgebenen Bereichs des Trägerrahmens 300 (siehe Figur 3) abdecken lässt, sodass die Frontbaugruppe geschlossen wird. Dabei entsteht ein von dem Trägerrahmen 300 und dem Abschlussblech 500 umgebener geschlossener Innenraum, welcher die Leiterplatte 400 aufnehmen kann.

Des Weiteren ist das Abschlussblech 500 mit mehreren Löchern 502 versehen, welche mit den Befestigungsstiften 202 der Frontblende 100 (siehe Figur 2), den Löchern 312 des Trägerrahmens 300 und den Löchern 402 der Leiterplatte 400 korrespondieren, sodass die Befestigungsstifte 202 durch die Löcher 502 geführt werden können.

Außerdem weist das Abschlussblech 500 mehrere Befestigungslöcher 509 auf, die mit den Schraublöchern 309 des Trägerrahmens 300 (siehe Figur 3) korrespondieren. Die Löcher 509 dienen zum Befestigen des Abschlussblechs 500 an der Rückseite des Trägerrahmens 300, indem Befestigungsschrauben (nicht gezeigt) durch die Löcher 509 geführt und in die Schraublöcher 309 des Trägerrahmens 300 eingedreht werden.

Ferner ist das Abschlussblech 500 mit einer Aussparung 503 versehen, welche zum Durchführen elektrischer Leitungen dient, die von der Hauptbaugruppe der Rundfunkempfangseinrichtung in die Frontbaugruppe verlaufen. Daneben verfügt das Abschlussblech 500 über drei Anschraublaschen 501, welche senkrecht aus der Rückseite des Abschlussblechs 500 ragen und zum Befestigen der Frontbaugruppe an dem Gehäuse der Hauptbaugruppe dienen.

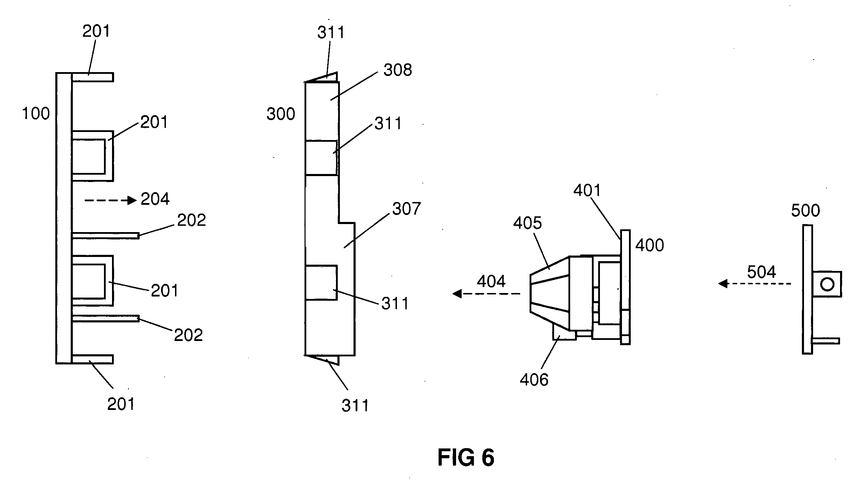

**Figur 6** zeigt die Frontblende 100, den Trägerrahmen 300, die Leiterplatte 400 und das Abschlussblech 500 jeweils in einer Seitenansicht zur Verdeutlichung einer Ausführungsform des erfindungsgemäßen Verfahrens zum Montieren einer Frontbaugruppe für ein Gerät oder Aggregat in einem Fahrzeug.

Bei einem ersten Verfahrensschritt werden die in Figur 6 gezeigten Bestandteile der Frontbaugruppe bereitgestellt.

Bei einem zweiten Verfahrensschritt wird die Leiterplatte 400 in den Trägerrahmen 300 eingesetzt, sodass die Löcher 402 (siehe Figur 4) der Leiterplatte 400 mit den Löchern 312 (siehe Figur 3) des Trägerrahmens 300 fluchten und die Befestigungslöcher 413 (siehe Figur 4) der Leiterplatte 400 mit den Schraublöchern der Abstandshalter 313 (siehe Figur 3) des Trägerrahmens 300 fluchten. Insbesondere wird die Leiterplatte 400 derart in den Trägerrahmen 300 eingesetzt, dass die Leiterplatte von der Seitenwand 307 des Trägerrahmens 300 umschlossen wird und die auf der Leiterplatte 400 befestigten Drehknöpfe 405 und Drucktasten 406 durch die Aussparungen 301 bis 303 (siehe Figur 3) des Trägerrahmens 300 geführt werden. Dazu wird die Leiterplatte 400 in Richtung 404 zu dem von der Seitenwand 307 umschlossenen rückseitigen Bereich des Trägerrahmens 300 bewegt, bis die Leiterplatte 400 an den Abstandshaltern 313 (siehe Figur 3) anliegt.

Dann wird die Leiterplatte 400 an dem Trägerrahmen 300 befestigt, indem durch jedes der Befestigungslöcher 413 (siehe Figur 4) eine Befestigungsschraube (nicht gezeigt) geführt und in das Schraubloch des zugehörigen Abstandshalters 313 (siehe Figur 3) eingedreht wird. Alternativ dazu kann die Leiterplatte 400 auch auf eine andere Art an dem Trägerrahmen 300 befestigt werden, beispielsweise durch Verkleben oder Einrasten.

Bei einem dritten Verfahrensschritt wird das Abschlussblech 500 so an der Rückseite des Trägerrahmens 300 befestigt, dass die Löcher 502 (siehe Figur 5) des Abschlussblechs 500 mit den Löchern 312 (siehe Figur 3) des Trägerrahmens 300 fluchten. Dazu wird das Abschlussblech 500 in Richtung 504 derart auf die Seitenwand 307 aufgesetzt, dass das Abschlussblech 500 den von der Seitenwand 307 umschlossenen Bereich des Trägerrahmens 300 abdeckt. Auf diese Weise wird ein von dem Trägerrahmen 300 und dem Abschlussblech 500 umschlossener Innenraum der Frontbaugruppe gebildet, welcher die Leiterplatte 400 aufnimmt.

Dann wird durch jedes der Befestigungslöcher 509 (siehe Figur 5) des Abschlussblechs 500 eine Befestigungsschraube (nicht gezeigt) hindurchgeführt und in das jeweils korrespondierende Schraubloch 309 (siehe Figur 3) des Trägerrahmens 300 eingedreht. Auf diese Weise wird eine erste Befestigung des Abschlussblechs 500 an dem Trägerrahmen 300 hergestellt. Diese hat den Vorteil, dass das Abschlussblech 500 bei Austauschen der Frontblende 100 der fertig montierten Frontbaugruppe weiter am Trägerrahmen 300 festgehalten werden kann, sodass ein Eindringen vom Fremdkörpern in den Innenraum der Frontbaugruppe vermieden wird.

Alternativ dazu kann das Abschlussblech auch auf eine andere Weise an dem Trägerrahmen befestigt werden, beispielsweise durch Verkleben oder durch Verrasten, wofür entsprechende Rastelemente vorgesehen wären. Abweichend davon ist es auch möglich, dass das Abschlussblech bei dem vorliegenden Verfahrensschritt nicht auf dem Trägerrahmen befestigt, sondern nur lose auf dem Trägerrahmen angeordnet wird.

Bei einem vierten Verfahrensschritt wird die Frontblende 100 an der Vorderseite des Trägerrahmens 300 befestigt, indem die Rastelemente 201 der Frontblende 100 mit den Rastelementen 311 des Trägerrahmens 300 verrastet werden. Dazu wird die Frontblende 100 in Richtung 204 auf die Vorderseite des Trägerrahmens 300 aufgesetzt, sodass die Befestigungsstifte 202 der Frontblende 100 durch die Löcher 312 (siehe Figur 3) des Trägerrahmens 300, die Löcher 402 (siehe Figur 4) der Leiterplatte 400 und die Löcher 502 (siehe Figur 5) des Abschlussblechs 500 geführt werden. Auf diese Weise wird eine erste Befestigung der Frontblende 100 an dem Trägerrahmen 300 hergestellt.

Damit wird die Frontblende 100 erst im vorletzten Schritt des erfindungsgemäßen Verfahrens, also vergleichsweise spät, montiert. Das hat den Vorteil, dass das Risiko eines Beschädigens der Frontblende 100 während folgender Montageschritte im Vergleich zu einer herkömmlichen Frontbaugruppe vermindert ist.

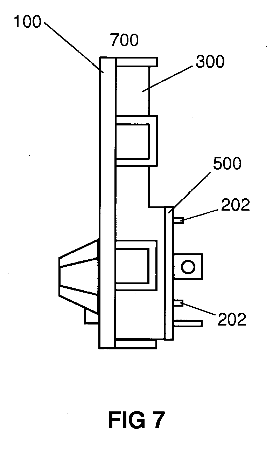

**Figur 7** zeigt eine Seitenansicht der Frontbaugruppe 700 nach dem Ausführen des vierten Verfahrensschritts. Die Schrauben, mit denen das Abschlussblech 500 an dem Trägerrahmen 300 befestigt wurde, sind für eine bessere Übersichtlichkeit nicht dargestellt.

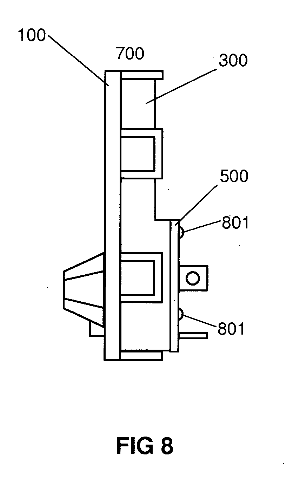

Bei einem fünften Verfahrensschritt wird an dem durch das Abschlussblech 500 geführten Ende jedes Befestigungsstifts 202 durch Heißverstemmen eine pilzkopfförmige Verdickung 801 (siehe Figur 8) ausgebildet, sodass das Abschlussblech 500 an dem Trägerrahmen 300 befestigt wird. Das heißt, es wird eine zweite Befestigung des Abschlussblechs 500 an dem Trägerrahmen 300 hergestellt. Gleichzeitig wird damit auch eine zweite Befestigung der Frontblende 100 an dem Trägerrahmen 300 hergestellt. Mit anderen Worten werden sowohl das Abschlussblech 500 als auch die Frontblende 100 an dem Trägerrahmen 300 gesichert. Die Verdickung 801 ist derart ausgebildet, dass der Durchmesser der Verdickung 801 größer als der Durchmesser des zugeordneten Lochs 502 (siehe Figur 5) des Abschlussblechs 500 ist. Auf diese Weise wird sichergestellt, dass die Verdickung 801 nicht unerwünscht durch das Loch 502 gleiten kann.

Alternativ zu der genannten Pilzkopfform kann die Verdickung auch eine andere Form aufweisen, beispielsweise pyramidenförmig, kegelförmig, zylinderförmig oder nietenförmig sein. Ferner kann die Verdickung auch durch ein anderes Verfahren als Heißverstemmen ausgebildet werden, beispielsweise durch Heißversiegeln.

**Figur 8** zeigt eine Seitenansicht der Frontbaugruppe 700 nach dem Ausführen des fünften Verfahrensschritts. Die Schrauben, mit denen das Abschlussblech 500 an dem Trägerrahmen 300 befestigt wurde, sind in Figur 8 für eine bessere Übersichtlichkeit nicht dargestellt.

Im Folgenden wird eine Ausführungsform des erfindungsgemäßen Verfahrens zum Demontieren der in Figur 8 gezeigten Frontbaugruppe vorgestellt.

Bei einem ersten Verfahrensschritt werden die Verdickungen 801 der Befestigungsstifte 202 entfernt, sodass eine der beiden Befestigungen des Abschlussblechs 500 an dem Trägerrahmen 300 gelöst wird. Damit wird auch eine der beiden Befestigungen der Frontblende 100 an dem Trägerrahmen gelöst. Zum Entfernen der Verdickungen 801 werden diese aufgebohrt. Es ist jedoch auch möglich, die Verdickungen 801 auf eine andere Art zu entfernen, beispielsweise durch Abschneiden oder durch thermisches Verformen.

Bei einem zweiten Verfahrensschritt werden die Rastelemente 201 (siehe Figur 2) der Frontblende 100 von den Rastelementen 311 (siehe Figur 3) des Trägerrahmens 300 entrastet, sodass eine weitere Befestigung der Frontblende 100 an dem Trägerrahmen 300 gelöst wird. Dazu können die Rastelemente 201 und 311 beispielsweise manuell entrastet werden.

Bei einem dritten Verfahrensschritt wird die Frontblende 100 von dem Trägerrahmen 300 abgenommen. Dazu wird die Frontblende 100 derart von der Vorderseite des Trägerrahmens weggezogen, dass die Befestigungsstifte 202 entgegen der Richtung, in welche sie beim Montieren der Frontbaugruppe in die Löcher 312 (siehe Figur 3) und 402 (siehe Figur 4) eingeführt wurden, aus den genannten Löchern herausgezogen werden.

Damit wird die Frontblende 100 von der Frontbaugruppe 700 abgenommen, ohne die Frontbaugruppe 700 zu öffnen. Dadurch wird ein Eindringen von Fremdkörpern in den Innenraum der Frontbaugruppe beim Austauschen der Frontblende 100 vermieden.

Anschließend kann eine neue Frontblende auf der Frontbaugruppe 700 montiert werden.

## Patentansprüche

1. Frontbaugruppe (700) für ein Gerät oder Aggregat in einem Fahrzeug, wobei die Frontbaugruppe (700) aufweist:
einen Trägerrahmen (300) mit einem ersten Rastelement (311) und einem ersten Loch (312),
eine in dem Trägerrahmen (300) angeordnete Leiterplatte (400) mit einem Bedienelement (405, 406) oder einer Anzeigeeinheit (407) und einem zweiten Loch (402),
ein an der Rückseite des Trägerrahmens (300) befestigtes Abschlussblech (500) mit einem dritten Loch (502) und
eine an der Vorderseite des Trägerrahmens (300) angeordnete Frontblende (100) mit einem zweiten Rastelement (201) und einem Befestigungsstift (202), welcher durch das erste Loch (312), das zweite Loch (402) und das dritte Loch (502) geführt ist,
wobei das erste Rastelement (311) mit dem zweiten Rastelement (201) verrastet ist, sodass die Frontblende (100) an dem Trägerrahmen (300) befestigt ist, und
der Befestigungsstift (202) eine an der Rückseite des Abschlussblechs (500) angeordnete Verdickung (801) aufweist, sodass eine zusätzliche Befestigung der Frontblende (100) an dem Trägerrahmen (300) ausgebildet ist.

2. Frontbaugruppe (700) gemäß Anspruch 1,
wobei das zweite Rastelement (201) an einem Außenrand (206) der Frontblende (100) angeordnet ist und der Befestigungsstift (202) von dem Außenrand (206) beabstandet ist.

3. Frontbaugruppe (700) gemäß Anspruch 2,
wobei der Befestigungsstift (202) auf einem Steg (205) der Frontblende (100) angeordnet ist.

4. Frontbaugruppe (700) gemäß einem der vorhergehenden Ansprüche,
wobei die Verdickung (801) pilzkopfförmig, pyramidenförmig, kegelförmig, zylinderförmig oder nietenförmig ausgebildet ist.

5. Frontbaugruppe (700) gemäß einem der vorhergehenden Ansprüche,
wobei der Trägerrahmen (300) und die Frontblende (100) die Bedieneinheit eines weiteren Geräts oder Aggregats in dem Fahrzeug umrahmen.

6. Frontbaugruppe (700) gemäß Anspruch 5,
wobei das weitere Gerät oder Aggregat an dem Trägerrahmen (300) befestigt ist.

7. Verfahren zum Montieren einer Frontbaugruppe (700) für ein Gerät oder Aggregat in einem Fahrzeug mit den Schritten:
Bereitstellen eines Trägerrahmens (300) mit einem ersten Rastelement (311) und einem ersten Loch (312), einer Leiterplatte (400) mit einem Bedienelement (405, 406) oder einer Anzeigeeinheit (407) und einem zweiten Loch (402), eines Abschlussblechs (500) mit einem dritten Loch (502) und einer Frontblende (100) mit einem zweiten Rastelement (201) und einem Befestigungsstift (202),
Einsetzen der Leiterplatte (400) in den Trägerrahmen (300), sodass das zweite Loch (402) mit dem ersten Loch (312) fluchtet,
Befestigen des Abschlussblechs (500) an der Rückseite des Trägerrahmens (300), sodass das dritte Loch (502) mit dem ersten Loch (312) fluchtet,
Befestigen der Frontblende (100) an der Vorderseite des Trägerrahmens (300), indem der Befestigungsstift (202) durch das erste Loch (312), das zweite Loch (402) und das dritte Loch (502) geführt wird und das erste Rastelement (311) mit dem zweiten Rastelement (201) verrastet wird,
Ausbilden einer an der Rückseite des Abschlussblechs (500) angeordneten Verdickung (801) des Befestigungsstifts (202), sodass eine zusätzliche Befestigung der Frontblende (100) an dem Trägerrahmen (300) hergestellt wird.

8. Verfahren gemäß Anspruch 7,
bei dem die Verdickung (801) durch Heißverstemmen oder Heißversiegeln ausgebildet wird.

9. Verfahren zum Demontieren einer Frontbaugruppe (700) gemäß Anspruch 1 mit den Schritten:
Entfernen der Verdickung (801), sodass eine Befestigung der Frontblende (100) an dem Trägerrahmen (300) gelöst wird,
Entrasten des zweiten Rastelements (201) von dem ersten Rastelement (311), sodass eine weitere Befestigung der Frontblende (100) an dem Trägerrahmen (300) gelöst wird, und
Abnehmen der Frontblende (100) von dem Trägerrahmen (300), sodass der Befestigungsstift (202) aus dem ersten Loch (312) herausgezogen wird.

10. Verfahren gemäß Anspruch 9,
bei dem die Verdickung (801) durch Aufbohren zerstört wird.

## Claims

1. Front assembly (700) for a device or a unit in a vehicle, the front assembly (700) comprising:
a bearing frame (300) comprising a first latching element (311) and a first hole (312),
a printed circuit board (400) arranged in the bearing frame (300), the printed circuit board (400) comprising an operating element (405, 406) or a display element (407) and a second hole (402),
a closing panel (500) fastened to the back side of the bearing frame (300), the closing panel (500) comprising a third hole (502), and
a front panel (100) arranged on the front side of the of the bearing frame (300), the front panel (100) comprising a second latching element (201) and a fastening pin (202) which is passed through the first hole (312), the second hole (402) and the third hole (502),
wherein the first latching element (311) is latched with the second latching element (201) in such a way that the front panel (100) is fastened to the bearing frame (300) and
the fastening pin (202) comprises a thickening (801) arranged on the back side of the closing panel (500) in such a way that an additional fastening of the front panel (100) to the bearing frame (300) is formed.

2. Front assembly (700) according to claim 1
wherein the second latching element (201) is arranged on an outer edge (206) of the front panel (100) and the fastening pin (202) is spaced apart from the outer edge (206).

3. Front assembly (700) according to claim 2
wherein the fastening pin (202) is arranged on a bridge of the front panel (100).

4. Front assembly (700) according to one of the preceding claims
wherein the thickening (801) is formed mushroom-shaped, pyramid-shaped, conically, cylindrically, or rivet-shaped.

5. Front assembly (700) according to one of the preceding claims
wherein the bearing frame (300) and the front panel (100) frame the operating unit of another device or another unit in the vehicle.

6. Front assembly (700) according to claim 5
wherein the other device or the other unit is fastened to the bearing frame (300).

7. Method for assembling a front assembly (700) for a device or a unit in a vehicle, the method comprising the steps:
providing a bearing frame (300) comprising a first latching element (311) and a first hole (312), a printed circuit board (400) comprising an operating element (405, 406) or a display element (407) and a second hole (402), a closing panel (500) comprising a third hole (502), and a front panel (100) comprising a second latching element (201) and a fastening pin (202),
inserting the printed circuit board (400) into the bearing frame (300) in such a way that the second hole (402) is aligned with the first hole (312),
fastening the closing panel (500) to the back side of the bearing frame (300) in such a way that third hole (502) is aligned with the first hole (312),
fastening the front panel (100) to the front side of the bearing frame (300) by passing the fastening pin (202) through first hole (312), the second hole (402), and the third hole (502) and latching the first latching element (311) with the second latching element (201), and
forming a thickening (801) of the fastening pin (202) wherein the thickening (801) is arranged on the back side of the closing panel (500), in such a way that an additional fastening of the front panel (100) to the bearing frame (300) is formed.

8. Method according to claim 7
wherein the thickening (801) is formed by heat staking or heat sealing.

9. Method for disassembling a front assembly (700) according to claim 1, the method comprising the steps:
removing the thickening (801) in such a way the a fastening of the front panel (100) to the bearing frame (300) is loosened,
unlatching the second latching element (201) from the first latching element (311) in such a way that another fastening of the front panel (100) to the bearing frame (300) is loosened, and
detaching the front panel (100) from the bearing frame (300) in such a way the fastening pin (202) is pulled out of the first hole (312).

10. Method according to claim 9
wherein the thickening (801) is destroyed by drilling out.

## Revendications

1. Module avant (700) pour un appareil ou groupe dans un véhicule, le module avant (700) étant constitué :
d'un cadre support (300) doté d'un premier élément d'arrêt (311) et d'un premier trou (312),
d'une carte imprimée (400) placée dans le cadre support (300) et dotée d'un élément de commande (405, 406) ou d'une unité d'affichage (407) et d'un deuxième trou (402),
d'une tôle de terminaison (500) fixée au dos du cadre support (300) et dotée d'un troisième trou (502) et
d'un cache avant (100) placé sur la face avant du cadre support (300) et doté d'un deuxième élément d'arrêt (201) et d'une tige de fixation (202) traversant le premier trou (312), le deuxième trou (402) et le troisième trou (502),
le premier élément d'arrêt (311) étant enclenché dans le deuxième élément d'arrêt (201) de sorte que le cache avant (100) soit fixé au cadre support (300) et
la tige de fixation (202) présentant un épaississement (801) au dos de la tôle de terminaison (500) de manière à constituer une fixation supplémentaire du cache avant (100) sur le cadre support (300).

2. Module avant (700) selon la revendication 1,
**caractérisé en ce que** le deuxième élément d'arrêt (201) est placé sur un bord extérieur (206) du cache avant (100) et que la tige de fixation (202) est distante du bord extérieur (206).

3. Module avant (700) selon la revendication 2,
**caractérisé en ce que** la tige de fixation (202) est placée sur un talon (205) du cache avant (100).

4. Module avant (700) selon l'une des revendications précédentes,
**caractérisé en ce que** l'épaississement (801) est en forme de champignon, de pyramide, de cône, de cylindre ou de rivet.

5. Module avant (700) selon l'une des revendications précédentes,
**caractérisé en ce que** le cadre support (300) et le cache avant (100) encadrent l'unité de commande d'un autre appareil ou groupe dans le véhicule.

6. Module avant (700) selon la revendication 5,
**caractérisé en ce que** l'autre appareil ou groupe est fixé au cadre support (300).

7. Procédure de montage d'un module avant (700) pour un appareil ou un groupe dans un véhicule, constituée des étapes suivantes :
mise à disposition d'un cadre support (300) doté d'un premier élément d'arrêt (311) et d'un premier trou (312), d'une carte imprimée (400) dotée d'un élément de commande (405, 406) ou d'une unité d'affichage (407) et d'un deuxième trou (402), d'une tôle de terminaison (500) dotée d'un troisième trou (502) et d'un cache avant (100) doté d'un deuxième élément d'arrêt (201) et d'une tige de fixation(202),
introduction de la carte imprimée (400) dans le cadre support (300) de sorte que le deuxième trou (402) soit aligné par rapport au premier trou (312),
fixation de la tôle de terminaison (500) au dos du cadre support (300) de sorte que le troisième trou (502) soit aligné par rapport au premier trou (312),
fixation du cache avant (100) à la face avant du cadre support (300), la tige de fixation (202) passant à travers le premier trou (312), le deuxième trou (402) et le troisième trou (502) et le premier élément d'arrêt (311) étant enclenché dans le deuxième élément d'arrêt (201),
constitution d'un épaississement (801) de la tige de fixation (202) au dos de la tôle de terminaison (500) de manière à constituer une fixation supplémentaire du cache avant (100) sur le cadre support (300).

8. Procédure selon la revendication 7,
**caractérisée en ce que** l'épaississement (801) est constitué par matage à chaud ou scellement à chaud.

9. Procédure de démontage d'un module avant (700) selon la revendication 1, constituée des étapes suivantes :
suppression de l'épaississement (801) de manière à défaire une fixation du cache avant (100) sur le cadre support (300),
déclenchement du deuxième élément d'arrêt (201) du premier élément d'arrêt (311) de manière à défaire une autre fixation du cache avant (100) sur le cadre support (300) et
démontage du cache avant (100) du cadre support (300) de manière à sortir la tige de fixation (202) du premier trou (312).

10. Procédure selon la revendication 9,
**caractérisée en ce que** l'épaississement (801) est détruit par perçage.
